# EUROPÄISCHE PATENTANMELDUNG

(11) **EP 0 913 883 A1**
(43) Veröffentlichungstag der Anmeldung: **06.05.1999**
(21) Anmeldenummer: 98440244.6
(22) Anmeldetag: 02.11.1998
(51) Int. Cl.: H01R 9/24, H01R 9/16, G02B 6/38, G02B 6/44

(54) **Baugruppe mit Schwenkvorrichtung zur Auslenkung von Steckverbindungen**

(30) Priorität: 03.11.1997 DE 19748416
(71) Anmelder: ALCATEL, 75008 Paris (FR)
(72) Erfinder: Amberger, Reinhard, 70499 Stuttgart (DE)
(74) Vertreter: Knecht, Ulrich Karl, Dipl.-Ing.

(57) **Zusammenfassung**

Eine Baugruppe (1) mit Frontplatte (2) hat eine an der Frontplatte (2) außen angeordnete Schwenkvorrichtung (8) zum Haltern und Auffächern von mehreren parallel aneinander liegenden Steckverbindungen (5, 6, 7).

Die Schwenkvorrichtung (8) besteht aus einem an der Frontplatte (2) fest montierten Haltewinkel (10) und mehreren am Haltewinkel (10) beweglich gelagerten Schwenkteilen (11). Letztere haben eine H-förmige Konfiguration, bei der an den frei schwenkenden Enden 2-polige Kupplungen (6) befestigt sind, die mittels Steckern (5, 7) interne Leitungen (4) der Baugruppe (1) mit externen Leitungen verbinden. Die Schwenkvorrichtung (8) ist mit einer Haube (9) abdeckbar.

## Beschreibung

Die Erfindung betrifft eine Baugruppe mit einer aus einem Basiselement und beweglichen Elementen bestehenden Vorrichtung zur Auslenkung von aus Steckern und Kupplungen zusammengesetzten Steckverbindungen, von denen die Kupplungen an den beweglichen Elementen fixiert sind. Baugruppen mit derartigen Vorrichtungen werden beispielsweise in Systemen der Nachrichtentechnik verwendet.

Eine Baugruppe mit den im Oberbegriff des Anspruchs 1 genannten Merkmalen ist aus der DE 42 43 072 C2 bekannt. Bei dieser Baugruppe handelt es sich um eine elektrische Flachbaugruppe zum Einbau in ein Gestell mit dicht neben- oder übereinander angeordneten Einbauplätzen. Die steckbar ausgebildete Baugruppe besteht unter anderem aus einer Leiterplatte und einem an der Leiterplatte starr befestigten Grundelement. An diesem ist eine mit Aufnahmen für Steckverbindungen ausgebildete Haltevorrichtung beweglich angelenkt, so daß die Kupplungen von einer innerhalb der Baugruppe liegenden rückwärtigen Stellung in eine Stellung vor die Stirnseite der Baugruppe auslenkbar sind.

Im DE 91 08 757 U1 ist außerdem ein elektrisches Gerät mit Anschlüssen für Lichtwellenleiterstecker beschrieben, dessen Gehäuse im Frontbereich mehrere V-förmige, treppenartig aufeinander folgend eingedrückte Vertiefungen aufweist. An jeweils einer Flanke der Vertiefungen ist ein Anschluß für einen Steckverbinder vorgesehen, dessen Längsachse mit der Frontseite des Gehäuses beispielsweise einen Winkel von 45 % einschließt.

Ferner ist aus dem DE 93 16 137 U1 noch eine in einen Baugruppenträger einschiebbare Leiterplatte mit mehreren Anordnungen zur Halterung je einer bewegbaren LWL-Kupplung bekannt. Die Halteanordnung besteht aus einem an der Leiterplatte drehbar gelagerten ortsfesten Teil mit einem im ortsfesten Teil schlittenförmig geführten und bis zu einem Anschlag herausziehbaren beweglichen Teil, an dem die LWL-Kupplung befestigt ist. Die LWL-Kupplung kann mit dem beweglichen Teil aus der Leiterplattenbaugruppe herausgezogen und zur Verbindung mit einem komplementären Stecker passend geschwenkt und die Anordnung nach der Verbindung in die Baugruppe zurückgeschoben werden.

Im Zuge optimaler Raumausnutzung ist jedoch bei den bekannten Bauweisen in den mit elektrischen und/oder optischen Komponenten voll bestückten Baugruppen, die weitgehend festgelegte Außenabmessungen nicht überschreiten dürfen, für die Unterbringung zusätzlicher Steckkupplungen häufig kein Platz mehr vorhanden.

Der Erfindung liegt die Aufgabe zugrunde, eine in einen Baugruppenträger einsetzbare Baugruppe zu schaffen, bei der an der Frontseite zugeführte steckbare Kabel individuell zugänglich mit der Baugruppe zugeordneten komplementären Kupplungen verbunden werden können. Diese Aufgabe wird erfindungsgemäß von einer Baugruppe mit den im Anspruch 1 angegebenen Merkmalen gelöst. Die Unteransprüche enthalten vorteilhafte Ausbildungen der Baugruppe. Mit der Erfindung erzielbare Vorteile sind der Beschreibung zu entnehmen.

Die Erfindung wird anhand eines in Zeichnungen dargestellten Ausführungsbeispiels wie folgt näher beschrieben.

In den Zeichnungen zeigen:
- Fig. 1: eine Baugruppe mit mehreren mittels einer Haube abdeckbaren Kupplungen und Steckern, teilweise ausgeschnitten, in einer Seitenansicht;
- Fig. 2: die Baugruppe der Fig. 1 ohne Haube mit aufgefächerten Kupplungen und Steckern;
- Fig. 3: ein in drei Ansichten dargestelltes Schwenkteil zur Befestigung einer zweipoligen Kupplung;
- Fig. 4: das Schwenkteil der Fig. 3 mit einer daran befestigten Kupplung und zwei innerhalb des Schwenkteiles mit der Kupplung verbundenen Steckern, in der Draufsicht.

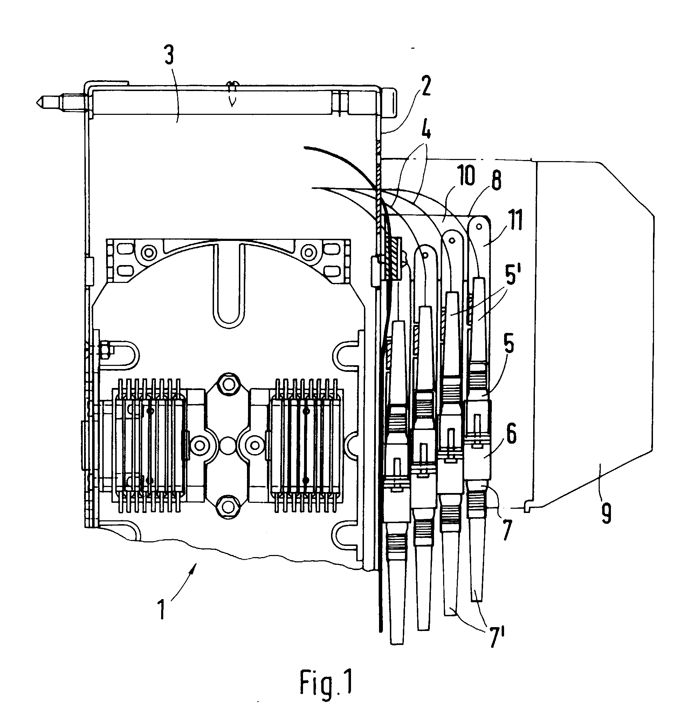

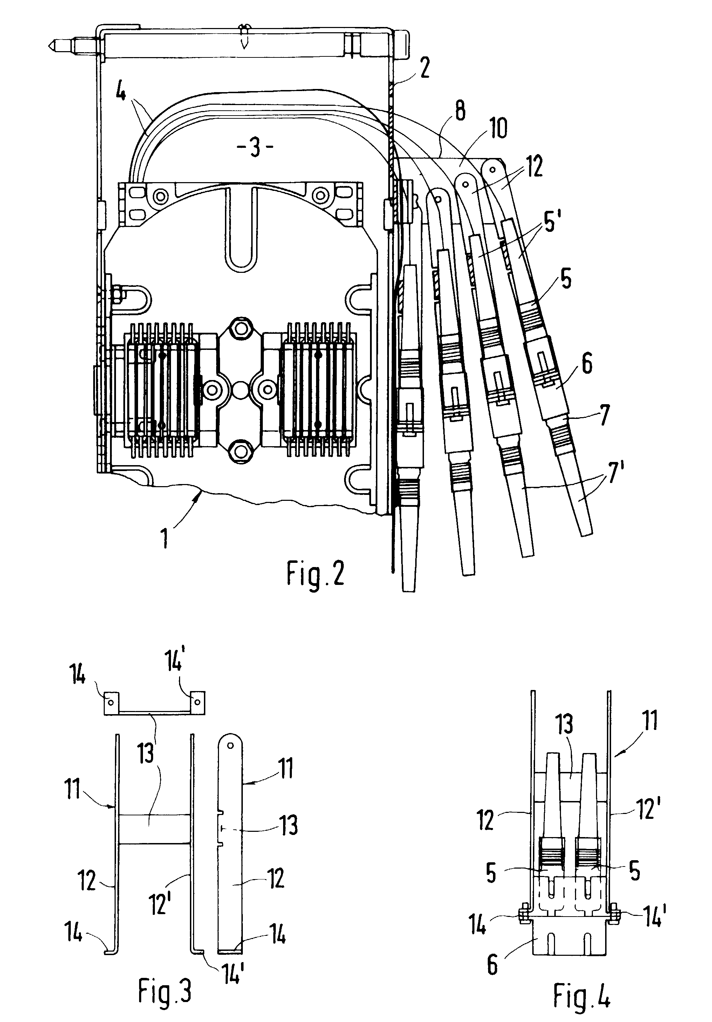

In den Fig. 1 und 2 ist die Baugruppe insgesamt mit 1 bezeichnet. Bei dem vorliegenden Ausführungsbeispiel handelt es sich um eine als Spleißkassette dienende Flachbaugruppe mit einer Frontplatte 2. Die Frontplatte 2 hat wenigstens eine Öffnung, die sich in Einbaulage der Baugruppe 1 im Bereich des oberen Endes befindet. Durch die Öffnung sind aus dem Innenraum 3 der Baugruppe 1 mehrere in geeigneten Steckern 5 endende interne optische und/oder elektrische Leitungen 4 herausgeführt und mit passenden Kupplungen 6 verbunden, in die von der entgegengesetzten Seite aus jeweils Stecker 7 von entsprechenden, extern zugeführten Leitungen eingesteckt werden. Die Kupplungen 6 sind an einer Schwenkvorrichtung 8 fixiert, die wiederum an der Außenseite der Frontplatte 2 der Baugruppe 1 befestigt und mittels einer Haube 9 abdeckbar ist (Fig. 1).

Die Schwenkvorrichtung 8 besteht aus einem an der Frontplatte 2 der Baugruppe 1 starr befestigten Basiselement und einem daran beweglich angelenkten Element. Das Basisteil ist vorzugsweise als U-förmiger Haltewinkel 10 mit von der Frontplatte 2 abstehenden Schenkeln ausgebildet, obwohl anstelle eines im Querschnitt U-förmigen Haltewinkels natürlich auch zwei L-förmige Winkel verwendet werden können. Bei dem beweglichen Element handelt es sich um ein H-förmiges Schwenkteil 11, das als einstückiges Stanzbiegeteil konsipiert ist.

Wie Fig. 3 zeigt, hat das Schwenkteil 11 zwei in der Draufsicht hochkant stehende streifenartige Hebelarme 12, 12', die durch mindestens einen Steg 13 miteinander verbunden sind. Die rückwärtigen, vorzugsweise gerundeten Hebelenden dienen der schwenkbaren Lagerung an den aufragenden Schenkeln des Haltewinkels 10, während die vorderen, jeweils rechtwinklig nach außen gebogenen Hebelenden Haltelappen 14, 14' für die Befestigung wenigstens einer Kupplung 6 bilden. Zur Halterung des Schwenkteiles 11 werden beispielsweise Lagerzapfen verwendet, die so in den beiden Schenkeln des Haltewinkels 10 befestigt sind, daß sie entweder beide nach innen oder nach außen vorstehen und in komplementäre Löcher der aufrastbaren Hebelarme 12, 12' eingreifen. In äquivalenter Ausführung können die Lagerzapfen natürlich auch jeweils nach innen oder nach außen gerichtet an den Hebelenden angeordnet sein und die zugehörigen Löcher in den Schenkeln des Haltewinkels 10.

Bei dem in Fig. 4 dargestellten Ausführungsbeispiel ist die Breite des Schwenkteiles 11 für die Befestigung einer flachen, im Querschnitt rechteckigen, zweipoligen Kupplung 6 ausgelegt. Von einer derartigen, aus Schwenkteil 11 und Kupplung 6 bestehenden Anordnung sind vier Anordnungen in vertikal hängender Lage, also parallel zur Frontplatte 2 so treppenartig versetzt an den Schenkeln des Haltewinkels 10 angelenkt, daß sie in Ruhelage aneinander liegen (Fig. 1) und zum ungehinderten Einsetzen oder Ziehen von Steckern 5, 7 beliebig aufgefächert werden können (Fig. 2). Je nachdem wie breit die Frontplatte 2 der Baugruppe 1 bemessen ist, kann auch die Breite von Haltewinkel 10 und Schwenkteilen 11 entsprechend variieren und bei Bedarf für die Aufnahme von breiteren Kupplungsleisten höherer Polzahl ausgebildet sein. Dabei ist es unerheblich, ob die Hebelarme 12, 12' innen oder außen an den Schenkeln des Haltewinkels 10 gelagert sind. Entscheidend ist allein, daß die aufgesetzte Haube 9 nicht breiter als die Frontplatte 2 der Baugruppe 1 ist.

Die Schwenkvorrichtung 8 besteht in vorteilhafter Weise aus nur wenigen verschiedenen und äußerst einfach konzipierten Einzelteilen, die, wie Haltewinkel 10 und Schwenkteile 11, als Blechstanzteile sehr preiswert herstellbar sind. Außerdem sind bei der dargestellten Ausführung auf eng begrenztem Raum vier doppelpolige Kupplungen 6 untergebracht, die mittels sechzehn Steckern 5, 7 acht Leitungsverbindungen gestatten. Durch die Anordnung des Haltewinkels 10 unterhalb der Öffnung in der Baugruppen-Frontplatte 2 sowie die Anordnung der Schwenkteile 11 im Haltewinkel 10 und durch die Verwendung von Steckern 5, 7 mit Knickschutztüllen 5', 7' werden Leitungsbrüche, wie insbesondere aus Glasfasern bestehende interne Leitungen 4, vermieden. Schließlich bietet die die Schwenkvorrichtung 8 abdeckende Haube 9 mechanischen Schutz gegen Beschädigung und erlaubt nach der Abnahme das Auffächern der Schwenkteile 11, so daß die Stecker 5, 7 individuell zugänglich sind und bei Bedarf ungehindert gereinigt werden können.

## Patentansprüche

1. Baugruppe (1) mit einer aus einem Basiselement und beweglichen Elementen bestehenden Schwenkvorrichtung (8) zur Auslenkung von aus Steckern (5, 7) und Kupplungen (6) zusammensetzbaren Steckverbindungen, von denen die Kupplungen (6) an den beweglichen Elementen fixiert sind, **dadurch gekennzeichnet**, daß die Baugruppe (1) eine Frontplatte (2) hat und das Basiselement ein an der Frontplatte (2) außen befestigter Haltewinkel (10) ist, und daß die beweglichen Elemente aus mehreren am Haltewinkel (10) angelenkten Schwenkteilen (11) bestehen.

2. Baugruppe (1) mit Schwenkvorrichtung (8) nach Anspruch 1, dadurch gekennzeichnet, daß die Schwenkteile (11) jeweils zwei durch mindestens einen Steg (13) H-förmig miteinander verbundene Hebelarme (12, 12') aufweisen, die an einem Ende am Haltewinkel (10) angelenkt sind und am anderen Ende wenigstens eine Kupplung (6) tragen.

3. Baugruppe (1) mit Schwenkvorrichtung (8) nach Anspruch 1 oder 2, dadurch gekennzeichnet, daß mehrere Schwenkteile (11) so treppenartig versetzt am Haltewinkel (10) gelagert sind, daß sie in Ruhelage parallel zur Frontplatte (2) aneinander liegen, bedarfsweise jedoch individuell aufgefächert werden können.

4. Baugruppe (1) nach einem der Ansprüche 1 bis 3, dadurch gekennzeichnet, daß die Schwenkvorrichtung (8) mit einer an der Frontplatte (2) entfernbar befestigten Haube (9) abgedeckt ist.
